# EUROPEAN PATENT APPLICATION

(11) **EP 3 174 250 A1**
(43) Date of publication of application: **31.05.2017**
(21) Application number: 16186442.6
(22) Date of filing: 30.08.2016
(51) Int. Cl.: H04L 12/28, H04W 4/00, H04W 4/02, H04W 4/08, H04W 4/06

(54) **DEVICE GROUP MANAGEMENT SYSTEM, METHOD AND APPARATUS, COMPUTER PROGRAM AND RECORDING MEDIUM**

(30) Priority: 27.11.2015 CN 201510847066
(71) Applicant: Xiaomi Inc., Beijing 100085 (CN)
(72) Inventor: CHEN, Hong, BEIJING, 100085 (CN); JIA, Weiguang, BEIJING, 100085 (CN); HOU, Enxing, BEIJING, 100085 (CN)
(74) Representative: Perrot, Emilie

(57) **Abstract**

The present invention discloses a device group management system, method and apparatus, a computer program and a recording medium, which belong to the field of smart home. The method comprises: after receiving an adding instruction of adding a target device into a target group, sending (301) a broadcasting instruction to the target device, the broadcasting instruction triggering the target device to broadcast a signal; receiving (302) signal strengths sent by reference devices, each of the signal strengths being a signal strength of a received broadcast signal which is acquired by a respective one of the reference devices after it receives the broadcast signal; and sorting (303) the reference devices based on the signal strengths fed back by the reference devices.

## Description

### TECHNICAL FIELD

The present invention is related to the field of smart home, and more particularly, to a device group management system, method and apparatus, a computer program and a recording medium.

### BACKGROUND

As the number of smart home devices in houses increases, mobile terminals need to control more smart home devices.

To facilitate management, users usually want to group multiple smart devices in the same room into the same group. When carrying out a grouping process, users have to sequentially find the smart devices in the same room, and add the found smart devices into a group corresponding to the room. The process of identifying a great number of smart devices one by one is of low efficiency and high error rate.

### SUMMARY

To solve the problem in the prior arts that the grouping process involving finding smart devices one by one is of low efficiency and high error rate, the present invention provides a device group management system, method and apparatus, a computer program and a recording medium.

According to a first aspect, the invention relates to a device group management system comprising a management terminal, a target device and reference devices.

The management terminal is configured to, after receiving an adding instruction of adding the target device into a target group, send a broadcasting instruction to the target device. The target device is configured to, after receiving the broadcasting instruction, broadcast a signal. The reference devices are each configured to, after receiving the signal, acquire a signal strength of the received signal and feed the signal strength back to the management terminal. The management terminal is further configured to sort the reference devices based on the signal strengths fed back by the reference devices.

The technical solution provided by the above embodiment of the present invention may produce the following advantageous effects. When pre-grouping is performed by the management terminal, the management terminal sends a broadcasting instruction to the target device. After receiving a signal broadcast by the target device, each reference device feeds a signal strength of its received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

In a particular embodiment, the management terminal is further configured to: receive a setting instruction of setting the target group; based on the setting instruction, generate the target group for which a widget for adding the target device is provided; after the widget is triggered, displaying acquired smart devices; and determining a smart device selected by a user as the target device, wherein the acquired smart devices are smart devices bound to a user account logging in the management terminal or smart devices located in the same local area network (LAN) as the management terminal.

The technical solution provided by the above optional embodiment of the present invention may produce the following advantageous effects. After a user clicks on the widget for adding the target device, selectable target devices are displayed for the user, so that the time for finding devices one by one is saved.

In a particular embodiment, the management terminal is further configured to: acquire a type of the target device, select one or more of the reference devices which have the same type as the target device or select one or more of the reference devices which have signal strengths higher than a predetermined strength threshold, and sort the selected reference devices based on the signal strengths fed back by the reference devices.

The technical solution provided by the above optional embodiment of the present invention may produce the following advantageous effects. By acquiring a type of the target device and selecting the reference devices having the same type as the target device or selecting the reference devices having signal strengths higher than a predetermined strength threshold, and sorting the selected reference devices based on the signal strengths fed back by the reference devices, a user can manage and maintain the smart devices in the same room more conveniently, the time for sorting reference devices can be reduced and the sorting efficiency can be improved.

In a particular embodiment, the management terminal is further configured to determine one of the sorted reference devices and add the same into the target group.

The technical solution provided by the above optional embodiment of the present invention may produce the following advantageous effects. By adding a reference device selected by a user from the sorted reference devices into the target group, the reference device can be added into the target group very quickly.

In a particular embodiment, the target device is further configured to broadcast the signal according to the same transmission power.

The technical solution provided by the above optional embodiment of the present invention may produce the following advantageous effects. As the target device broadcasts the signal according to the same transmission power, the signal strengths of signals received by the reference devices can better reflect the distances between the respective reference devices and the target device. Accordingly, the management terminal can perform sorting based on the signal strengths fed back by the reference devices, thereby improving the accuracy of sorting the reference devices.

According to a second aspect, the invention relates to a device group management method comprising: after receiving an adding instruction of adding a target device into a target group, sending a broadcasting instruction to the target device, the broadcasting instruction triggering the target device to broadcast a signal; receiving signal strengths sent by reference devices, each of the signal strengths being a signal strength of a received signal broadcast by the target device and being acquired by a respective one of the reference devices after it receives the broadcast signal; and sorting the reference devices based on the signal strengths fed back by the reference devices.

The technical solution provided by the above embodiment of the present invention may produce the following advantageous effects. When pre-grouping is performed by the management terminal, the management terminal sends a broadcasting instruction to the target device. After receiving a signal broadcast by the target device, each reference device feeds a signal strength of the received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

In a particular embodiment, said step of sorting the reference devices based on the signal strengths fed back by the reference devices comprises: acquiring a type of the target device; selecting one or more of the reference devices which have the same type as the target device or selecting one or more of the reference devices which have signal strengths higher than a predetermined strength threshold, and sorting the selected reference devices based on the signal strengths fed back by the reference devices.

The technical solution provided by the above optional embodiment of the present invention may produce the following advantageous effects. By acquiring a type of the target device and selecting the reference devices having the same type as the target device or selecting the reference devices having signal strengths higher than a predetermined strength threshold, and sorting the selected reference devices based on the signal strengths fed back by the reference devices, a user can manage and maintain the smart devices in the same room more conveniently, the time for sorting reference devices can be reduced and the sorting efficiency can be improved.

In a particular embodiment, the method further comprises: receiving a setting instruction of setting the target group; based on the setting instruction, generating the target group for which a widget for adding the target device is provided; after the widget is triggered, displaying acquired smart devices, wherein the acquired smart devices are smart devices bound to a user account logging in the management terminal or smart devices located in the same local area network (LAN) as the management terminal; and determining a selected smart device among the displayed smart devices as the target device.

The technical solution provided by the above optional embodiment of the present invention may produce the following advantageous effects. After a user clicks on the widget for adding the target device, selectable target devices are displayed for the user, the time for finding devices one by one is saved.

In a particular embodiment, the method further comprises determining one of the sorted reference devices and adding the same into the target group.

The technical solution provided by the above optional embodiment of the present invention may produce the following advantageous effects. By adding a reference device selected by a user from the sorted reference devices into the target group, the reference device can be added into the target group very quickly.

In a particular embodiment, said step of sorting the reference devices based on the signal strengths fed back by the reference devices comprises sorting the reference devices in a descending order of the signal strengths fed back by the reference devices.

The technical solution provided by the above optional embodiment of the present invention may produce the following advantageous effects. By sorting the reference devices in a descending order of the signal strengths fed back by the reference devices, the reference devices that are most possibly located in the same room as the target device are displayed first to a user, thereby improving the grouping efficiency of the user.

According to a third aspect, the invention relates to a device group management apparatus corresponding to the device group management method, the apparatus comprising: a sending module configured to, after that an adding instruction of adding a target device into a target group is received, send a broadcasting instruction to the target device, the broadcasting instruction triggering the target device to broadcast a signal; a signal strength receiving module configured to receive signal strengths sent by reference devices, each of the signal strengths being a signal strength of a received signal broadcast by the target device and being acquired by a respective one of the reference devices after it receives the signal; and a sorting module configured to sort the reference devices based on the signal strengths fed back by the reference devices and received by the signal strength receiving module.

In a particular embodiment, the sorting module comprises: an acquiring sub-module configured to acquire a type of the target device and select one or more of the reference devices which have the same type as the target device or select one or more of the reference devices which have signal strengths higher than a predetermined strength threshold, and a sorting sub-module configured to sort the selected reference devices based on the signal strengths fed back by the reference devices and acquired by the acquiring sub-module.

In a particular embodiment, the apparatus further comprises: a generating module configured to receive a setting instruction of setting the target group and generate, based on the setting instruction, the target group for which a widget for adding the target device is provided; a displaying module configured to, after the widget generated by the generating module is triggered, display acquired smart devices, wherein the acquired smart devices are smart devices bound to a user account logging in the management terminal or smart devices located in the same local area network (LAN) as the management terminal; and a determining module configured to determine a selected smart device among the smart devices displayed by the displaying module as the target device.

In a particular embodiment, the apparatus further comprises: an adding module configured to determine one of the reference devices sorted by the sorting module and add the same into the target group.

In a particular embodiment, the sorting module is further configured to sort the reference devices in a descending order of the signal strengths fed back by the reference devices and received by the signal strength receiving module.

According to a fourth aspect, the invention relates to a device group management apparatus comprising: a processor; and a memory storing instructions executable by the processor. The processor is configured to: after receiving an adding instruction of adding a target device into a target group, send a broadcasting instruction to the target device, the broadcasting instruction being configured to trigger the target device to broadcast a signal; receive signal strengths sent by reference devices, each of the signal strengths being a signal strength of a received signal broadcast by the target device and being acquired by a respective one of the reference devices after it receives the signal; and sort the reference devices based on the signal strengths fed back by the reference devices.

In one particular embodiment, the steps of the device group management method are determined by computer program instructions.

Consequently, according to a fifth aspect, the invention is also directed to a computer program for executing the steps of a device group management method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an application environment wherein a device group management method is performed according to some embodiments;
Fig. 2A is a block diagram showing a device group management system according to an embodiment;
Fig. 2B is a schematic diagram showing an interface for device group management displayed by a mobile terminal according to an embodiment;
Fig. 3 is a flow chart showing a device group management method according to an embodiment;
Fig. 4A is a flow chart showing a device group management method according to another embodiment;
Fig. 4B is a flow chart showing a device group management method according to yet another embodiment;
Fig. 4C is a flow chart showing a device group management method according to yet another embodiment;
Fig. 5 is a block diagram showing a device group management apparatus according to another embodiment; and
Fig. 6 is a block diagram showing a device group management apparatus according to another embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

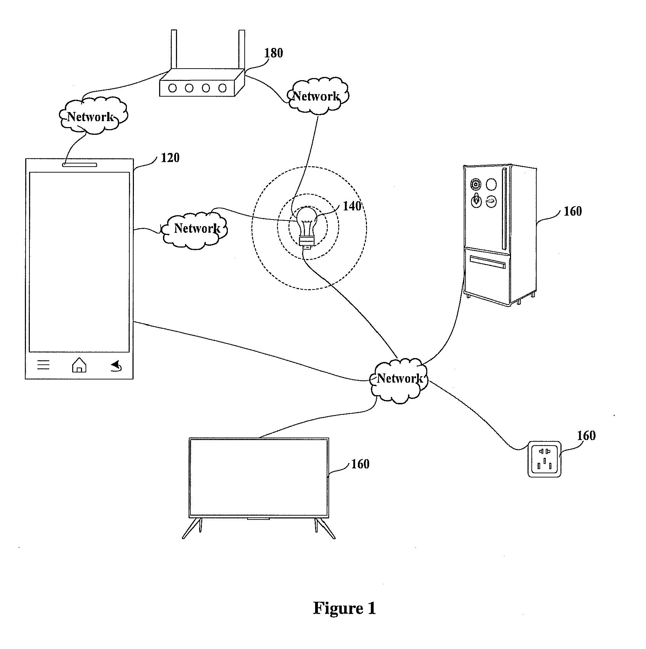

Fig. 1 is a schematic drawing showing an application environment where a device group management method is performed according to some embodiments. As shown in Fig. 1, the application environment may include a management terminal 120, a target device 140 and reference devices 160.

The management terminal 120 may be a mobile phone, a tablet computer, a server or the like.

The target device 140 and the reference devices 160 the may be devices having a radio signal transceiving function, such as smart electric lamps, smart sockets, smart TVs, air conditioners, refrigerators or the like. In the present invention, a selected smart device to be added into a target group is taken as the target device 140, the remaining smart devices are taken as the reference devices 160.

In actual home scenes, the target device 140 and some reference devices 160 may be located in the same room, while other reference devices 160 may be located in different rooms. The embodiment is not limiting in this regard.

The management terminal 120 and the target device 140 may be connected to each other via wired or wireless networks.

Optionally, the application environment may include a router 180 which provides Wi-Fi (Wireless-Fidelity) connections for the management terminal 120, the target device 140 and the reference devices 160.

All the following embodiments will be described by taking an example where they are implemented in the application environment shown in Fig. 1.

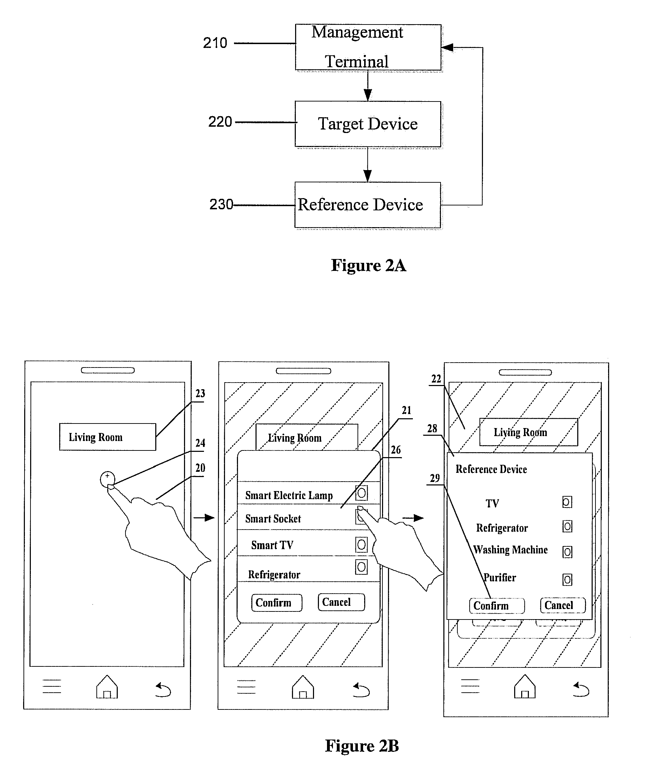

Fig. 2A is a block diagram showing a device group management system according to an embodiment. As shown in Fig. 2A, the device group management system includes a management terminal 210, a target device 220 and reference devices 230.

The management terminal 210 is configured to, after receiving an adding instruction of adding the target device 220 into a target group, send a broadcasting instruction to the target device 220.

The target device 220 is a smart device selected at the management terminal 210 by a user for the purpose of grouping.

The target group referred to herein may be a group established by the user for containing multiple smart devices. To facilitate collective management, the target group may be used to contain smart devices that may be located in the same room or that need to be controlled simultaneously.

In practical implementation, the target group may be preset by the management terminal 210, or may be added manually by the user. When the target group is added manually by the user, the user may name the added target group.

For example, if the target group is named "Living Room", all the smart devices in the living room such as smart electric lamps and smart TVs may be contained in the "Living Room" group. Then, the user can control all the smart devices in the living room simultaneously.

The adding instruction may be an instruction generated when the user adds a selected smart device into the target group. For example, if a user selects a smart device listed in the management terminal 210 and triggers an adding widget provided for a target group, the management terminal 210 generates an instruction of adding the smart device into the target group.

The management terminal 210 receives the instruction of adding the smart device 220 into the target group and, after receiving the instruction, sends a broadcasting instruction to the target device 220. The broadcasting instruction is used to instruct the target device 220 to broadcast a signal.

In a possible implementation, when sending the broadcasting instruction to the target device 220, the management terminal 210 may further specify the number of times for the target device 220 to broadcast the signal and the time interval for broadcasting the signal. For example, the management terminal 210 may add a designated number of times and a designated time interval as parameters into a data packet corresponding to the broadcasting instruction. Accordingly, when receiving the data packet, the target device 220 may derive the designated number of times and the designated time interval carried therein, and broadcast a signal at every time interval designated by the management terminal 210 until the signal is broadcast the designated number of times. In this way, it can be ensured that each reference device 230 receives the signal broadcast by the target device 220.

Optionally, the broadcasting instruction may not specify the number of times for the target device 220 to broadcast the signal and the time interval for broadcasting the signal. The target device 220 may broadcast the signal according to a preset number of times and a preset time interval.

Optionally, the management terminal 210 sends the broadcasting instruction to the target device 220. The broadcasting instruction may include a power value by which the target device 220 broadcasts a signal. Accordingly, the target device 220 may broadcast the signal according to the power value carried by the broadcasting instruction.

Optionally, the broadcasting instruction may not carry a power value. The target device 220 may broadcast a signal according to a preset power value.

The target device 220 is configured to, after receiving the broadcasting instruction sent by the management terminal 210, broadcast a signal.

After receiving the broadcasting instruction sent by the management terminal 210, the target device 220 broadcasts a signal. The target device 220 may broadcast the signal according to a preset power value or a power value carried in the broadcasting instruction and designated by the management terminal 210.

In practical implementation, reference devices 230 are often located near the target device 220, so the reference devices 230 can receive the signal broadcast by the target device 220. Further, the reference devices 230 are each configured to, after receiving the signal, acquire a signal strength of the received signal and feed the signal strength back to the management terminal 210.

In a possible implementation, in addition to the signal strengths of their received signals, the reference devices 230 may feed their own identifications back to the management terminal 210.

Optionally, when feeding the signal strength back to the management terminal 210, each reference device 230 may encapsulate the signal strength in the payload of a data packet. Optionally, the reference device 230 may encapsulate its own identification in the payload or head of a data packet, so that the management terminal 210 can acquire the signal strength of the signal received by the reference device 230 and the identification of the reference device 230 after decapsulating the data packet,

The management terminal 210 is further configured to sort the reference devices 230 based on the signal strengths fed back by the reference devices 230.

In a possible implementation, the management terminal 210 may sort the reference devices 230 in a descending order of the signal strengths fed back by the reference devices 230. Generally, when feeding back the signal strengths, the reference devices 230 will feed back their own identifications. Thus, the management terminal 210 may sort the identifications corresponding to the signal strengths and hence the reference devices 230 sending the signal strengths, based on the signal strengths.

To perform grouping of smart devices, the management terminal 210 first needs to automatically acquire the identifications of the smart devices, and then provides the smart devices to the user for selecting one of them as a target device. Optionally, the smart devices acquired by the management terminal 210 are smart devices bound to a user account logging in the management terminal 210 or smart devices located in the same local area network (LAN) as the management terminal 210.

In practical implementation, the management terminal 210 is further configured to: receive a setting instruction of setting the target group; and based on the setting instruction, generate the target group for which a widget for adding target devices 220 is provided; after the widget is triggered, displaying acquired smart devices; and determining a smart device selected by a user as the target device 220.

For example, refer to Fig. 2B which shows three interfaces 20, 21 and 22 of the management terminal 210 displayed at different times. A "Living Room Group" 23 is shown in the interface 20. A widget 24 for adding a target device 220 is provided below the "Living Room Group" 23. When the user clicks on the widget 24, the management terminal 210 displays the interface 21 in which multiple smart devices are displayed. The multiple smart devices may be smart devices bound to the user account logging in the management terminal 210 or smart devices located in the same LAN as the management terminal 210.When the control corresponding to the smart electric lamp 26 in the interface 21 is triggered, the management terminal 210 determines the smart electric lamp 26 as the target device 220. That is, the management terminal 210 receives an adding instruction of adding the target device 220 into the "Living Room Group" 23. At this time, other smart devices than the smart electric lamp 26 are reference devices 230. Then, the management terminal 210 sends a broadcasting instruction to the smart electric lamp 26 (namely the target device 220). The smart electric lamp 26 broadcasts a signal based on the broadcasting instruction. The reference devices 230 feed the signal strengths of their received signals to the management terminal 210. The management terminal 210 displays the interface 22 shown in Fig. 2B for the user based on the signal strengths fed back by the reference devices 230. The interface 22 includes a list box 28 for displaying sorted reference devices 230 to the user.

It should be noted that the widget and the characters in Fig. 2B are only illustrative examples, and are not intended to restrict the presentation of the actual products of the present invention. The parts not completely shown are blocked by corresponding floating boxes. In principle, when a floating box is displayed, the parts not completely shown cannot be directly operated or viewed by the user.

In a possible implementation, the types of the smart devices in the same group may be the same. In this case, when adding a target device, the smart devices having the same type as the target device can be displayed, so that the user can subsequently select and add a smart device into the group. Then, the management terminal 210 is further configured to acquire a type of the target device 220 and select the reference devices 230 having the same type as the target device 220 or select the reference devices 230 having signal strengths higher than a predetermined strength threshold, and sort the selected reference devices 230 based on the signal strengths fed back by the reference devices 230.

For example, if the type of the target device 220 acquired by the management terminal 210 is "Smart Electric Lamp", only sorted smart electric lamps can be displayed in a list box for displaying the sorted smart devices. Alternatively, after receiving the signal strengths fed back by the reference devices 230, the management terminal 210 selects the reference devices 230 having signal strengths higher than the predetermined strength threshold. Then, only the reference devices 230 having signal strengths higher than the predetermined strength threshold may be displayed in a list box for displaying the sorted smart devices. By doing so, the user can manage and maintain the smart devices of the same type in the same room more conveniently, the time for sorting reference devices can be reduced and the sorting efficiency can be improved.

Optionally, the management terminal 210 is further configured to determine one of the sorted reference devices 230 and add the same into the target group.

Take Fig. 2B as an example again. If the user clicks on "TV" in the list box 28 and clicks on the confirm control 29, then TVs are added into the "Living Room Group" 23.

In practical implementation, the signal broadcast by the target device 220 may be lost or interfered for some reason. To prevent such condition from affecting reception of the signal by the reference devices 230, the target device 220 may broadcast the signal multiple times. To guarantee that the signal repeatedly received by a reference device 230 can accurately reflect the distance from the reference device 230 to the target device 220, the target device 220 is further configured to broadcast the signal according to the same transmission power.

To sum up, with the device group management system provided by the present invention, the management terminal sends a broadcasting instruction to the target device when pre-grouping is performed by the management terminal. After receiving a signal broadcast by the target device, each reference device feeds a signal strength of its received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

After a user clicks on the widget for adding the target device, selectable target devices are displayed for the user, so that the time for finding devices one by one is saved.

By acquiring a type of the target device and selecting the reference devices having the same type as the target device or selecting the reference devices having signal strengths higher than a predetermined strength threshold, and sorting the selected reference devices based on the signal strengths fed back by the reference devices, a user can manage and maintain the smart devices in the same room more conveniently, the time for sorting reference devices can be reduced and the sorting efficiency can be improved.

By adding a reference device selected by a user from the sorted reference devices into the target group, the reference device can be added into the target group very quickly.

As the target device broadcasts the signal according to the same transmission power, the signal strengths of signals received by the reference devices can better reflect the distances between the respective reference devices and the target device. Accordingly, the management terminal can perform sorting based on the signal strengths fed back by the reference devices, thereby improving the accuracy of sorting the reference devices.

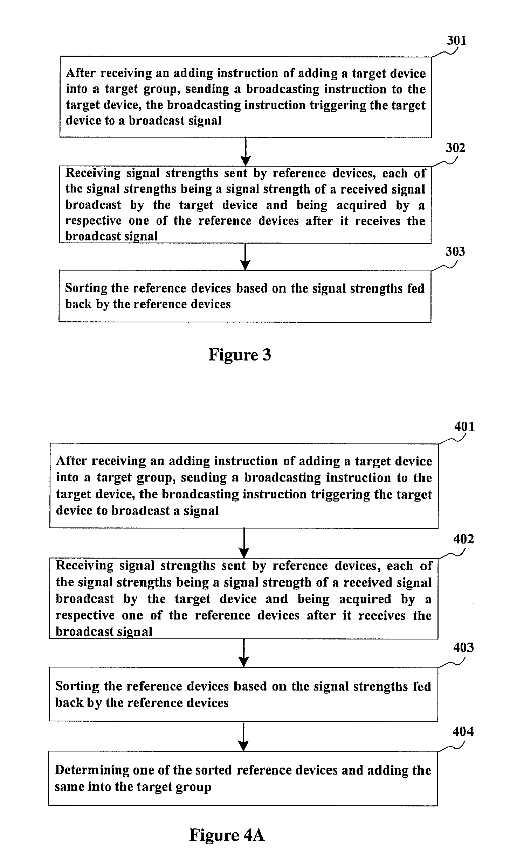

Fig. 3 is a flow chart showing a device group management method according to an embodiment. The smart device group management method is performed by the management terminal 120 in the application environment shown in Fig. 1. As shown in Fig. 3, the smart device group management method comprises the following steps.

In Step 301, after receiving an adding instruction of adding a target device into a target group, a broadcasting instruction is sent to the target device, the broadcasting instruction triggering the target device to broadcast a signal.

In Step 302, signal strengths sent by reference devices are received, each of the signal strengths being a signal strength of a received signal broadcast by the target device and being acquired by a respective one of the reference devices after it receives the broadcast signal.

In Step 303, the reference devices are sorted based on the signal strengths fed back by the reference devices.

To sum up, with the device group management method provided by the present invention, the management terminal sends a broadcasting instruction to the target device when pre-grouping is performed by the management terminal. After receiving a signal broadcast by the target device, each reference device feeds a signal strength of its received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

Fig. 4A is a flow chart showing a device group management method according to another embodiment. The smart device grouping method is performed by the management terminal 120 in the application environment shown in Fig. 1. As shown in Fig. 4A, the smart device grouping method comprises the following steps.

In Step 401, after receiving an adding instruction of adding a target device into a target group, a broadcasting instruction is sent to the target device, the broadcasting instruction triggering the target device to broadcast a signal.

The target device is a smart device selected at the management terminal by a user for the purpose of grouping.

The target group discussed herein may be a group established by the user for containing multiple smart devices. To facilitate collective management, the target group may be used to contain smart devices that may be located in the same room or that need to be controlled simultaneously.

In practical implementation, the target group may be preset by the management terminal, or may be added manually by the user. When the target group is added manually by the user, the user may name the added target group.

The adding instruction may be an instruction generated when the user adds a selected smart device into the target group. For example, if a user selects a smart device listed in the management terminal and triggers an adding widget provided for a target group, the management terminal generates an instruction of adding the smart device into the target group.

In a possible implementation, when sending the broadcasting instruction to the target device, the management terminal may further specify the number of times for the target device to broadcast the signal and the time interval for broadcasting the signal. For example, the management terminal may add a designated number of times and a designated time interval as parameters into a data packet corresponding to the broadcasting instruction. Accordingly, when receiving the data packet, the target device may derive the designated number of times and the designated time interval carried therein, and broadcast a signal at every time interval designated by the management terminal until the signal is broadcast the designated number of times. In this way, it can be ensured that each reference device can receive the signal broadcast by the target device.

Optionally, the broadcasting instruction may not specify the number of times for the target device 220 to broadcast the signal and the time interval for broadcasting the signal. The target device may broadcast the signal according to a preset number of times and a preset time interval for broadcasting the signal.

Optionally, the management terminal sends the broadcasting instruction to the target device. The broadcasting instruction may include a power value by which the target device broadcasts a signal. Accordingly, the target device may broadcast the signal according to the power value carried by the broadcasting instruction.

Optionally, the broadcasting instruction may not carry a power value. The target device may broadcast a signal according to a preset power value.

In Step 402, signal strengths sent by reference devices are received, each of the signal strengths being a signal strength of a received signal broadcast by the target device and being acquired by a respective one of the reference devices after it receives the broadcast signal.

The management terminal receives signal strengths sent by reference devices, each of the signal strengths being a signal strength of a received signal broadcast by the target device and being acquired by a respective one of the reference devices after it receives the signal.

Optionally, in addition to the signal strengths of their received signals, the reference devices may feed their own identifications back to the management terminal.

Optionally, when feeding the signal strength back to the management terminal, each reference device may encapsulate the signal strength in the payload of a data packet. Optionally, the reference device may encapsulate its own identification in the payload or head of a data packet, so that the management terminal can acquire the signal strength of the signal received by the reference device and the identification of the reference device after decapsulating the data packet.

In Step 403, the reference devices are sorted based on the signal strengths fed back by the reference devices.

In a possible implementation, the management terminal may sort the reference devices in a descending order of the signal strengths fed back by the reference devices. Generally, when feeding back the signal strengths, the reference devices will feed back their own identifications. Thus, the management terminal may sort the identifications corresponding to the signal strengths and hence the reference devices sending the signal strengths based on the signal strengths.

To perform grouping of smart devices, the management terminal first needs to automatically acquire the identifications of the smart devices, and then provides the smart devices to the user for selecting one of them as a target device. Optionally, the smart devices acquired by the management terminal are smart devices bound to a user account logging in the management terminal or smart devices located in the same LAN as the management terminal.

In Step 404, one of the sorted reference devices is determined and added into the target group.

After receiving a reference device that is selected by the user from the sorted reference devices, the management terminal adds the reference device selected by the user into the target group. In this way, the target device and the reference device selected by the user are arranged in the same target group.

To sum up, with the device group management method provided by the present invention, the management terminal sends a broadcasting instruction to the target device when pre-grouping is performed by the management terminal. After receiving a signal broadcast by the target device, each reference device feeds a signal strength of its received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

As the target device broadcasts signals according to the same transmission power, the signal strengths of signals received by the reference devices can better reflect the distances between the respective reference devices and the target device. Accordingly, the management terminal can perform sorting based on the signal strengths fed back by the reference devices, thereby improving the accuracy of sorting the reference devices.

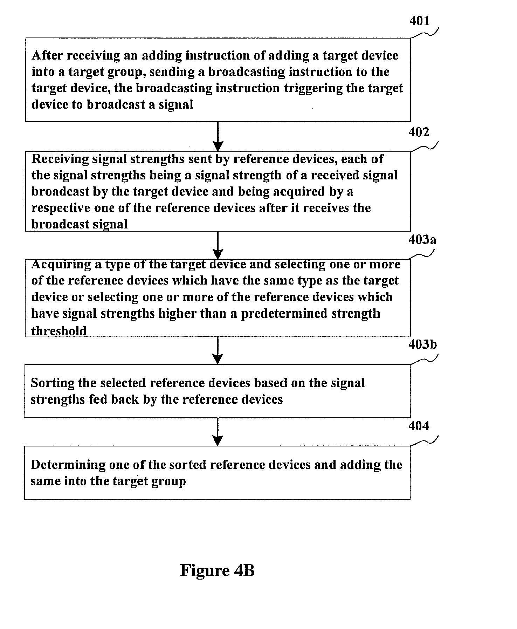

It should be noted that, in practical implementation, the types of the smart devices in the same group may be the same. In this case, when adding a target device, the smart devices having the same type as the target device can be displayed, so that the user can subsequently select and add a smart device into the group. In this case, referring to Fig. 4B, step 403 may be replaced with steps 403a and 403b.

In Step 403a, a type of the target device is acquired and the reference devices having the same type as the target device are selected or the reference devices having signal strengths higher than a predetermined strength threshold are selected.

In Step 403b, the selected reference devices are sorted based on the signal strengths fed back by the reference devices.

The above steps have been described in the above system embodiment, and will not be repeated in this embodiment.

By acquiring a type of the target device and selecting the reference devices having the same type as the target device or selecting the reference devices having signal strengths higher than a predetermined strength threshold, and sorting the selected reference devices based on the signal strengths fed back by the reference devices, a user can manage and maintain the smart devices in the same room more conveniently, the time for sorting reference devices can be reduced and the sorting efficiency can be improved.

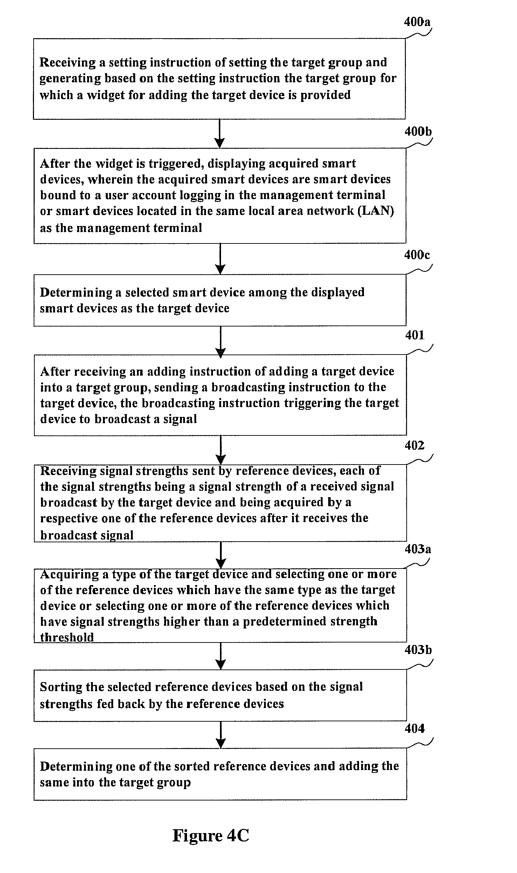

It should be further noted that, referring to Fig. 4C, before step 401, the method may further comprise steps 400a, 400b and 400c.

In Step 400a, a setting instruction of setting the target group is received and the target group is generated based on the setting instruction. For the target group, a widget for adding the target device is provided.

In Step 400b, after the widget is triggered, acquired smart devices are displayed, the acquired smart devices being smart devices bound to a user account logging in the management terminal or smart devices located in the same local area network (LAN) as the management terminal.

In Step 400c, a selected smart device among the displayed smart devices is determined as the target device.

After the user clicks on the widget for adding the target device, selectable target devices are displayed for the user, so that the time for finding devices one by one is saved.

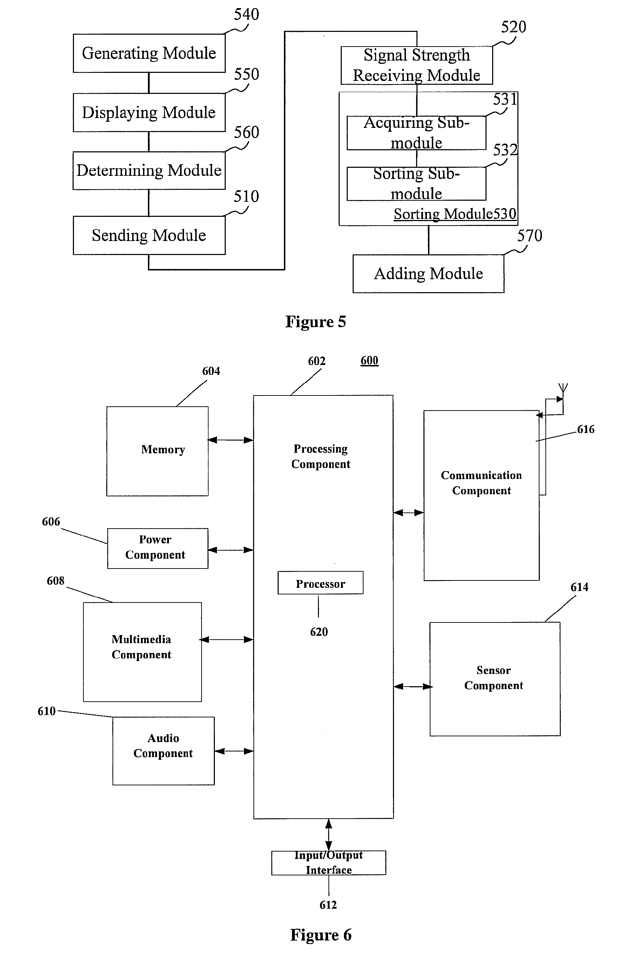

Fig. 5 is a block diagram showing a device group management apparatus according to an embodiment. The device group management apparatus may be the management terminal 120 in the above application environment or a part of it in the form of software, hardware or a combination thereof. As shown in Fig. 5, the device group management apparatus comprises a sending module 510, a signal strength receiving module 520 and a sorting module 530.

The sending module 510 is configured to, after that an adding instruction of adding a target device into a target group is received, send a broadcasting instruction to the target device, the broadcasting instruction triggering the target device to broadcast a signal.

The target device is a smart device selected at the management terminal by a user for the purpose of grouping.

The target group discussed herein may be a group established by the user for containing multiple smart devices. To facilitate collective management, the target group may be used to contain smart devices that may be located in the same room or that need to be controlled simultaneously. In practical implementation, the target group may be preset by the management terminal, or may be added manually by the user. When the target group is added manually by the user, the user may name the added target group.

The adding instruction may be an instruction generated when the user adds a selected smart device into the target group. For example, if a user selects a smart device listed in the management terminal and triggers an adding widget provided for a target group, the management terminal generates an instruction of adding the smart device into the target group.

Optionally, when sending the broadcasting instruction to the target device, the sending module 510 may further specify the number of times for the target device to broadcast the signal and the time interval for broadcasting the signal. For example, the sending module 510 may add a designated number of times and a designated time interval as parameters into a data packet corresponding to the broadcasting instruction. Accordingly, when receiving the data packet, the target device may derive the designated number of times and the designated time interval carried therein, and broadcast a signal at every time interval designated by the sending module 510 until the signal is broadcast the designated number of times. In this way, it can be ensured that each reference device can receive the signal broadcast by the target device.

Optionally, the broadcasting instruction may not specify the number of times for the target device to broadcast the signal and the time interval for broadcasting the signal. The target device may broadcast the signal according to a preset number of times and a preset time interval for broadcasting the signal.

Optionally, the sending module 510 sends the broadcasting instruction to the target device. The broadcasting instruction may include a power value by which the target device broadcasts the signal. Accordingly, the target device may broadcast the signal according to the power value carried by the broadcasting instruction.

Optionally, the broadcasting instruction may not carry a power value. The target device may broadcast a signal according to a preset power value.

The signal strength receiving module 520 is configured to receive signal strengths sent by reference devices, each of the signal strengths being a signal strength of a received signal broadcast by the target device and being acquired by a respective one of the reference signals after it receives the broadcast signal.

Optionally, in addition to the signal strengths of their received signals, the reference devices may feed their own identifications back to the signal strength receiving module 520.

Optionally, when feeding the signal strength back to the signal strength receiving module 520, each reference device may encapsulate the signal strength in the payload of a data packet. Optionally, the reference device may encapsulate its own identification in the payload or head of a data packet, so that the signal strength receiving module 520 can acquire the signal strength of the signal received by the reference device and the identification of the reference device after de-encapsulating the data packet.

The sorting module 530 is configured to sort the reference devices based on the signal strengths fed back by the reference devices and received by the signal strength receiving module 520.

Optionally, the sorting module 530 is configured to sort the reference devices in a descending order of the signal strengths fed back by the reference devices and received by the signal strength receiving module 520.

Generally, when feeding back the signal strengths, the reference devices will feed back their own identifications. Thus, the sorting module 530 may sort the identifications corresponding to the signal strengths and hence the reference devices sending the signal strengths based on the signal strengths.

To perform grouping of smart devices, the management terminal first needs to automatically acquire the identifications of the smart devices, and then provides the smart devices to the user for selecting one of them as a target device. Optionally, the smart devices acquired by the management terminal are smart devices bound to a user account logging in the management terminal or smart devices located in the same LAN as the management terminal.

Optionally, the types of the smart devices in the same group may be the same. In this case, when adding a target device, the smart devices having the same type as the target device can be displayed, so that the user can subsequently select and add a smart device into the group. Then, the sorting module 530 may further comprise an acquiring sub-module 531 and a sorting sub-module 532.

The acquiring sub-module 531 is configured to acquire a type of the target device and select the reference devices having the same type as the target device or select the reference devices having signal strengths higher than a predetermined strength threshold.

The sorting sub-module 532 is configured to sort the selected reference devices based on the signal strengths fed back by the reference devices and acquired by the acquiring sub-module 531.

By acquiring a type of the target device and selecting the reference devices having the same type as the target device or selecting the reference devices having signal strengths higher than a predetermined strength threshold using the acquiring sub-module 531, and sorting the selected reference devices based on the signal strengths fed back by the reference devices using the sorting sub-module 532, a user can manage and maintain the smart devices in the same room more conveniently, the time for sorting reference devices can be reduced and the sorting efficiency can be improved.

Optionally, the apparatus further comprises a generating module 540, a displaying module 550 and a determining module 560.

The generating module 540 is configured to receive a setting instruction of setting the target group and generate based on the setting instruction the target group for which a widget for adding the target device is provided.

The displaying module 550 is configured to, after the widget generated by the generating module 540 is triggered, display acquired smart devices, wherein the acquired smart devices are smart devices bound to a user account logging in the management terminal or smart devices located in the same local area network (LAN) as the management terminal.

The determining module 560 is configured to determine a selected smart device among the smart devices displayed by the displaying module 550 as the target device.

Optionally, the apparatus further comprises an adding module 570.

The adding module 570 is configured to determine one of the reference devices sorted by the sorting module 530 and add the same into the target group.

To sum up, with the device group management apparatus provided by the present invention, the management terminal sends a broadcasting instruction to the target device when pre-grouping is performed by the management terminal. After receiving a signal broadcast by the target device, each reference device feeds a signal strength of its received signal broadcast by the target device back to the management terminal, in which the reference devices are sorted based on the signal strengths. This solves the problem in the prior arts that the grouping process involving finding smart devices one by one is of low efficiency and high error rate, and achieves the effect that it is convenient for users to quickly select devices that may be in the same group as the target device and the grouping efficiency and accuracy are improved.

After a user clicks on the widget for adding the target device, selectable target devices are displayed for the user, so that the time for finding searching devices one by one is saved.

By acquiring a type of the target device and selecting the reference devices having the same type as the target device or selecting the reference devices having signal strengths higher than a predetermined strength threshold, and sorting the selected reference devices based on the signal strengths fed back by the reference devices, a user can manage and maintain the smart devices in the same room more conveniently, the time for sorting reference devices can be reduced and the sorting efficiency can be improved.

By adding a reference device selected by a user from the sorted reference devices into the target group, the reference device can be added into the target group very quickly.

As the target device broadcasts the signal according to the same transmission power, the signal strengths of signals received by the reference devices can better reflect the distances between the respective reference devices and the target device. Accordingly, the management terminal can perform sorting based on the signal strengths fed back by the reference devices, thereby improving the accuracy of sorting the reference devices.

With respect to the apparatuses in the above embodiments, the specific manners for performing operations for individual modules therein have been described in detail in the embodiments regarding the related methods, and will not be elaborated herein.

An embodiment of the present invention provides a device group management apparatus, which can realize the device group management method provided by the embodiments of the present invention and which comprises a processor and a memory storing instructions executable by the processor. The processor is configured to: after receiving an adding instruction of adding a target device into a target group, send a broadcasting instruction to the target device, the broadcasting instruction triggering the target device to broadcast a signal; receive signal strengths sent by reference devices, each of the signal strengths being a signal strength of a received signal broadcast by the target device and being acquired by a respective one of the reference devices after it receives the signal; and sort the reference devices based on the signal strengths fed back by the reference devices.

Fig. 6 is a block diagram showing a device group management apparatus according to another embodiment. For example, the apparatus 600 may be a mobile phone, a computer, a digital broadcast terminal, a messaging device, a gaming console, a tablet, a medical device, exercise equipment, a personal digital assistant or the like.

Referring to Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In one exemplary embodiment, the communication component 616receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the apparatus 600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A device group management system, **characterized in that** it comprises a management terminal (120, 210), a target device (140, 220) and reference devices (160, 230), wherein
the management terminal (120, 210) is configured to, after receiving an adding instruction of adding the target device (140, 220) into a target group, send a broadcasting instruction to the target device (140, 220);
the target device (140, 220) is configured to, after receiving the broadcasting instruction, broadcast a signal;
the reference devices (160, 230) are each configured to, after receiving the signal, acquire a signal strength of the received signal and feed the signal strength back to the management terminal (120, 210); and
the management terminal (120, 210) is further configured to sort the reference devices (160, 230) based on the signal strengths fed back by the reference devices (160, 230).

2. The system according to claim 1, wherein the management terminal (120, 210) is further configured to:
receive a setting instruction of setting the target group;
based on the setting instruction, generate the target group for which a widget for adding the target device is provided;
after the widget is triggered, displaying acquired smart devices;
determine a smart device selected by a user as the target device (140, 220),
wherein the acquired smart devices are smart devices bound to a user account logging in the management terminal or smart devices located in the same local area network (LAN) as the management terminal.

3. The system according to claim 1, wherein the management terminal (120, 210) is further configured to:
acquire a type of the target device (140, 220),
select one or more of the reference devices (160, 230) which have the same type as the target device (140, 220) or select one or more of the reference devices (160, 230) which have signal strengths higher than a predetermined strength threshold, and
sort the selected reference devices (160, 230), based on the signal strengths fed back by the reference devices (160, 230).

4. The system according to claim 1, wherein the management terminal (120, 210) is further configured to determine one of the sorted reference devices (160, 230) and add the same into the target group.

5. The system according to any of claims 1 to 4, wherein the target device (140, 220) is further configured to broadcast the signal according to the same transmission power.

6. A device group management method, **characterized in that** it comprises:
after receiving an adding instruction of adding a target device (140, 220) into a target group, sending (301, 401) a broadcasting instruction to the target device (140, 220), the broadcasting instruction triggering the target device (140, 220) to broadcast a signal;
receiving (302, 402) signal strengths sent by reference devices (160, 230), each of the signal strengths being a signal strength of a received signal broadcast by the target device (140, 220) and being acquired by a respective one of the reference devices (160, 230) after it receives the broadcast signal; and
sorting (303, 403) the reference devices (160, 230) based on the signal strengths fed back by the reference devices (160, 230).

7. The method according to claim 6, wherein said step (403) of sorting the reference devices (160, 230) based on the signal strengths fed back by the reference devices (160, 230) comprises:
acquiring (403a) a type of the target device (140, 220), selecting one or more of the reference devices (160, 230) which have the same type as the target device (140, 220) or selecting one or more of the reference devices (160, 230) which have signal strengths higher than a predetermined strength threshold, and
sorting (403b) the selected reference devices (160, 230), based on the signal strengths fed back by the reference devices (160, 230).

8. The method according to claim 6, further comprising:
receiving (400a) a setting instruction of setting the target group;
based on the setting instruction, generating the target group for which a widget for adding the target device (140, 220) is provided;
after the widget is triggered, displaying (400b) acquired smart devices, wherein the acquired smart devices are smart devices bound to a user account logging in the management terminal or smart devices located in the same local area network (LAN) as the management terminal; and
determining (400c) a selected smart device among the displayed smart devices as the target device (140, 220).

9. The method according to claim 6, further comprising determining (404) one of the sorted reference devices and adding the same into the target group.

10. The method according to any of claims 6 to 9, wherein said step (303, 405) of sorting the reference devices based on the signal strengths fed back by the reference devices comprises sorting the reference devices in a descending order of the signal strengths fed back by the reference devices.

11. A device group management apparatus, **characterized in that** it comprises:
a sending module (510) configured to, after that an adding instruction of adding a target device into a target group is received, send a broadcasting instruction to the target device (140, 220), the broadcasting instruction triggering the target device (140, 220) to broadcast a signal;
a signal strength receiving module (520) configured to receive signal strengths sent by reference devices (160, 230), each of the signal strengths being a signal strength of a received signal broadcast by the target device (140, 220) and being acquired by a respective one of the reference devices after it receives the signal; and
a sorting module (530) configured to sort the reference devices (160, 230) based on the signal strengths fed back by the reference devices (160, 230) and received by the signal strength receiving module.

12. The apparatus according to claim 11, further comprising:
a generating module (540) configured to receive a setting instruction of setting the target group and, based on the setting instruction, generate the target group for which a widget for adding the target device (140, 220) is provided;
a displaying module (550) configured to, after the widget generated by the generating module is triggered, display acquired smart devices, wherein the acquired smart devices are smart devices bound to a user account logging in the management terminal or smart devices located in the same local area network (LAN) as the management terminal;
a determining module (560) configured to determine a selected smart device among the smart devices displayed by the displaying module as the target device (140, 220); and
an adding module (570) configured to determine one of the reference devices (160, 230) sorted by the sorting module and add the same into the target group.

13. A computer program including instructions for executing the steps of a device group management method according to any one of claims 6 to 10, when said program is executed by a computer.

14. A recording medium readable by a computer and having recorded thereon a computer program including instructions for executing the steps of a device group management method according to any one of claims 6 to 10.
